# EUROPÄISCHE PATENTSCHRIFT

(11) **EP 0 889 273 B1**
(45) Veröffentlichungstag und Bekanntmachung des Hinweises auf die Patenterteilung: **11.09.2002**
(21) Anmeldenummer: 98110964.8
(22) Anmeldetag: 16.06.1998
(51) Int. Cl.: F16L 37/00, F16L 37/36

(54) **Kupplung zum Verbinden vakuumisolierter Leitungsenden**
Connection for vacuum insulated conduit ends
Raccord pour la connexion de tuyaux calorifugés à vide

(30) Priorität: 30.06.1997 DE 19727655
(43) Veröffentlichungstag der Anmeldung: 07.01.1999
(73) Patentinhaber: MESSER GRIESHEIM GMBH, 60547 Frankfurt (DE)
(72) Erfinder: Tocha, Klaus, 40764 Langenfeld (DE)

(56) Entgegenhaltungen:
- WO-A-92/14960
- DE-A- 3 221 372
- DE-A- 4 041 337
- DE-A- 4 104 711
- DE-A- 4 339 676
- DE-C- 19 516 029
- US-A- 2 543 590
- US-A- 4 335 747
- US-A- 4 805 417

## Beschreibung

Die Erfindung betrifft eine Kupplung zum Verbinden vakuumisolierter Leitungsenden über eine Kupplungsdose und einen Kupplungsstecker, die zum Führen eines kryogenen Mediums vorgesehen sind und jeweils an den äußeren Leitungsenden Mittel aufweisen, die die Leitungsenden verschließen.

Es sind bereits Kupplungen für kryogene Medien bekannt, die bezüglich ihrer Verbindungsmechanik und ihrer Mittel zum Öffnen und Schließen der Leitungsenden in zwei Gruppen eingeteilt werden können:

Aus der DE 19516029 C1, DE 4041337 A1 und DE 4339676 A1 sind Kupplungen für kryogene Medien bekannt, die einen Kupplungsstecker und eine Kupplungsdose aufweisen. Der Kupplungsstecker wird in die Kupplungsdose eingesteckt, so daß sich die vakuumisolierten äußeren Kupplungsgehäuse überlappen und ein außen am Kupplungsgehäuse angeordnetes Verbindungselement mit einem an der Kupplungsdose vorgesehenen Gegenstück in Eingriff gebracht werden kann. Die Verbindung wird durch Verschrauben des Kupplungssteckers mit der Kupplungsdose hergestellt. Während des dabei ausgeführten Verschiebevorganges des Kupplungssteckers in die Kupplungsdose wird die Kupplung zuerst gegen Umgebungsmedium abgedichtet; dann werden die die Leitungsenden verschließenden Mittel geöffnet. Die ventilartigen Mittel sind bei dieser Ausbildung der Kupplung weit entfernt von der Trennebene innerhalb der Kupplungsdose in der Kupplungsebene angeordnet.

In der Trennebene liegen sich die äußeren Stirnseiten von Kupplungsstecker und Kupplungsdose unmittelbar gegenüber.

In der Kupplungsebene liegen sich die die Leitungsenden verschließenden Mittel unmittelbar gegenüber. Die Mittel können geöffnet oder geschlossen werden und kryogenes Medium kann bei geöffnetem Mittel vom Leitungsende des Kupplungssteckers zum Leitungsende der Kupplungsdose strömen.

Darüber hinaus ist es aus der DE 41 04 711 A1 und der US 4,335,747 A1 bekannt, die Abdichtung gegen Umgebungsmedium getrennt vom Öffnen/Schließen der Mittel unmittelbar benachbart der Trennebene über Kugelhähne vozunehmen. Die Verbindung des Kupplungssteckers mit der Kupplungsdose erfolgt über mechanische Elemente in der Trennebene. Diese Kupplungen weisen ebenfalls weit entfernt von der Trennebene in der Kupplungsdose angeordnete ventilartige Mittel auf, deren Öffnung über das über die Trennebene hinaus und durch die geöffneten Kugelhähne hindurch bis zur Kupplungsebene mechanisch verschiebbare Leitungsende des Kupplungssteckers erfolgt. Das Leitungsende des Kupplungssteckers ist hierzu flexibel im Sinne eines Wellschlauches ausgebildet.

Aus US-A-2 543 590 ist eine Kupplung bekannt, die aus einer Kupplungsdose und einem Kupplungsstecker besteht, die jeweils an den äußeren Leitungsenden Mittel aufweisen, die die Leitungsenden verschließen. Der Kupplungsstecker weist eine mit dem einen Mittel verbundene Steuereinheit auf, die mit einem Steuerdruck beaufschlagt mindestens das eine Mittel öffnet. Die Steuerstange dieser Kupplung weist an ihrer zur Kupplungsdose gerichteten Seite kein Zentrierelementauf.

Die formschlüssigen Schraubverbindungen der bekannten Kupplungen zum Öffnen der ventilartigen Mittel stellen unter mechanischer und sicherheitstechnischer Betrachtung keine brauchbare Lösung dar, weil z. B. der mechanische und elektrische Aufwand bei der in der DE 40 41 337 A1 vorgeschlagenen automatischen Drehung der Überwurfmutter sehr groß ist und zu einer von Nichtfachleuten nicht mehr handhabbaren Ausbildung bezüglich der Größe und des Gewichts der Kupplung führt. Die in der DE 41 04 711 A1 dagegen vorgeschlagene Lösung, über das Drehen eines Gewindestiftes das Leitungsende zu verschieben bis es das ventilartige Mittel öffnet, führt zu einer komplizierten mechanischen Konstruktion der Mittel und des die Dichtung zwischen Kupplungsstecker und Kupplungsdose gewährleistenden Leitungsendes. Aber auch der in der DE 195 16 029 C1 offenbarte Hinweis beim Zusammenstecken und Verbinden des Kupplungssteckers mit der Kupplungsdose die Kraftaufbringung mittels Hebel, Exzenter oder mit fremdmediumbetriebenem Zylinder vorzunehmen, beschreitet nur den vom vorstehend bekannten Stand der Technik aufgezeigten Weg, nämlich, die Kupplungsgehäuse über eine Relativbewegung miteinander zu verbinden. Dabei sind die ventilartigen Mittel weit entfernt von der Trennebene in der Kupplungsdose angeordnet. Die Einsteck-/Einschiebeverbindung ist sicherheitstechnisch unbefriedigend, wenn die Kupplungsdose als Betankungseinrichtung (Tankverschluß) am Fahrzeug und der Kupplungsstecker an einer Zapfsäule einer Tankstelle angeordnet ist, da die Einsteckverbindung beim Wegfahren in verbundenem Zustand zu schweren Schäden an der Tankstelle und/oder dem Fahrzeug führen kann, auch wenn der Kupplungsstecker von der Kupplungsdose in der Trennebene gelöst ist und der Kupplungsstecker zur Kupplungsdose in der Kupplungsebene angeordnet ist. Hinzu kommt, daß bei der Betankung von Kryokraftstoffbehältern von Fahrzeugen eine Bedienung der Kupplung durch Nichtfachleute erfolgt, was eine einfache und sichere Ausbildung der Kupplung erfordert, damit die Bediener nicht mit dem tiefkalten Kryokraftstoff in Verbindung kommen.

Es wären daher Kupplungen für kryogene Medien wünschenswert, bei denen die aus dem Stand der Technik bekannten Nachteile vermieden werden.

Der Erfindung liegt die Aufgabe zugrunde, eine Kupplung für kryogene Medien zu schaffen, bei der die ventilartigen Mittel definiert femgesteuert geöffnet oder geschlossen werden können und bei der die Sicherheit bei der Bedienung und bei Bedienfehlem gegenüber den bekannten Kupplungen verbessert ist.

Diese Aufgabe wird erfindungsgemäß bei einer Kupplung der eingangs genannten Art durch die Merkmale des Anspruchs 1 gelöst.

Vorteilhafte Weiterbildungen der Erfindung sind in den Unteransprüchen angegeben.

Durch die ferngesteuerte Betätigung der erfindungsgemäßen Kupplung wird der Strömungsweg des kryogene Mediums unabhängig von Einsteck-/Einschiebewegen direkt freigegeben. Die lösbare und im Notfall entriegelbare Verbindung von Kupplungsstecker und Kupplungsdose findet dabei in einem separaten Schritt vorher statt. Damit ist sichergestellt, daß der Bediener der Kupplung nicht mit dem kryogenen Medium in Verbindung kommt, da er an der Kupplung nur die Verbindung von Kupplungsstecker und Kupplungsdose herstellen muß und die Öffnung der Mittel entfernt von der Kupplung über ein Bedienelement erfolgt. Dabei kann die Öffnung der Mittel auch selbsttätig über eine vorgegebene Zeit erfolgen, z. B. durch Münz- oder Chipeinwurf oder durch Abtasten von Geldkarten.

Der Steuerungsaufwand wird verringert, wenn die die beiden Leitungsenden verschließenden Mittel eine gleichsinnige Öffnungsrichtung haben, so daß die mit einem Steuerdruck, vorzugsweise einem Steuergas, beaufschlagte Steuereinheit ein Steuerelement über die Trennebene hinaus verschiebt und dabei die beiden ventilartigen Mittel öffnet. Hierbei ist das bei dem Kupplungsstecker vorgesehene Steuerelement als Steuerstange ausgebildet, die eine Dichtung trägt, welche mittels der Kraft eines Federelements des Balgs gegen eine am Leitungsende ausgebildete Dichtfläche gezogen wird, während die von einem Schließkörper getragene Dichtung der Kupplungsdose mittels der Kraft eines Federelements oder Balgs gegen die am Leitungsende vorgesehene Dichtfläche gedrückt wird. Verschiebt sich die Steuerstange aufgrund der ausfahrenden Steuereinheit axial zur Kupplungsdose, hebt die Dichtung der Steuerstange von der Dichtfläche ab; gleichzeitig entfernt die Steuerstange den Schließkörper entgegen der Kraft des Federelements oder die Federeigenschaften eines Balgs vom Sitz, so daß die vom Schließkörper getragene Dichtung ebenfalls von der Dichtfläche abhebt und das kryogene Medium vom Kupplungsstecker zur Kupplungsdose strömen kann.

Eine besonders einfach ausgebildete Steuereinheit weist einen Balg, vorzugsweise einen Metallbalg auf, dessen Innenraum mit einer Steuerleitung verbunden ist, welche mit ihrem anderen Ende an einen Druckgasraum angeschlossen ist. In der Steuerleitung ist ein fernsteuerbares Ventil angeordnet, das über ein Steuersignal geöffnet oder bei gleichzeitiger Druckentlastung des Balgs geschlossen werden kann. Selbstverständlich kann die Steuereinheit auch als Kolben-Zylindereinheit ausgebildet sein.

Die Abmessungen der Kupplung können verringert und der mechanische Aufbau wesentlich vereinfacht werden, wenn die Steuereinheit in dem Leitungsende angeordnet ist, da Durchführungen und Verbindungen entfallen und die Mittel direkt mit der Steuereinheit verbunden werden können.

Die nahezu geradlinige Verschiebung der Steuerstange und des Schließkörpers wird durch ein an der Stirnseite der Steuerstange vorgesehenes Zentrierelement erreicht, das in ein das Zentrierelement formschlüssig aufnehmendes Gegenstück am Schließkörper der Kupplungsdose eingreift. Über die formschlüssige Verbindung wird die axiale Führung der Steuerstange gewährleistet, die sich im geführten Schließkörper der Kupplungsdose zentriert.

Das Kaltfahren der Kupplung bei geschlossenem Mittel wird durch zwei Leitungen möglich, die mit dem Leitungsende verbunden sind. Dabei dient die durchmesserkleinere Leitung als Fülleitung durch die das tiefkalte Medium in das Leitungsende strömt und das Leitungsende vorkühlt. Über die durchmessergrößere Leitung strömt das verdampfte Medium ab. Im Betrieb der Kupplung strömt das kryogene Medium durch beide Leitungen um möglichst große Mengenströme und damit eine Füllzeitreduzierung bei geringem Druckverlust realisieren zu können.

Die Verbindung der Leitungsenden von Kupplungsstecker und Kupplungsdose findet unmittelbar benachbart zur Trennebene statt, da alle Mittel zum Verschließen der beiden Leitungsenden unmittelbar benachbart zur Trennebene vorgesehen sind, so daß die Trennebene und die Kupplungsebene nahezu in einer gemeinsamen Ebene liegen. Die Handhabung der Kupplung wird hierdurch erleichtert, da Einsteck-/Einschiebevorgänge der aus Edelstahl gefertigten Kupplungsgehäuse entfallen. Die Sicherheit erhöht sich, weil im Fehlerfall keine Formschlußverbindung den Kupplungsstecker in der Kupplungsdose hält. Hinzu kommt, daß alle Dichtungen unmittelbar benachbart zur Trennebene lösbar angeordnet und damit zugänglich sind. Ein Austausch fehlerhafter Dichtungen kann somit in einfacher Weise erfolgen.

Die Abdichtung von Kupplungsstecker und Kupplungsdose in der Trennebene erfolgt über vorzugsweise zwei Kupplungsflächen, auf denen jeweils eine Dichtung angeordnet ist. Die eine äußere Dichtung dichtet das Kupplungsgehäuse gegen den Eintritt von Umgebungsmedium ab und verhindert eine Eisbildung, während die innere Dichtung die Mittel gegen den Austritt von kryogenem Medium abdichtet. Durch die im zusammengekuppelten Zustand eine abgedichtete Ringkammer bildenden Dichtungen wird eine Verbindung des warmen Umgebungsmediums mit dem tiefkalten kryogenen Medium ausgeschlossen.

Der Kupplungsstecker wird mit der Kupplungsdose über ein Verriegelungselement verbunden, das sich an dem Kupplungsstecker abstützt (Festlager) und die Kupplungsdose gegen die Kupplungsflächen mit den Dichtungen zieht. Hierzu weist die Kupplungsdose an ihrem Umfang einen Flansch auf, der von einem halbschalenförmigen Element des Verriegelungselements hintergriffen wird und über ein Gestänge zur Kupplungssteckerseite gezogen wird. Dabei legen sich die Dichtungen dichtend an die Kupplungsflächen von Kupplungsstecker und Kupplungsdose. Der bei geöffneten Mitteln im Leitungsende sich einstellende Strömungsdruck bewirkt darüber hinaus druckproportional Dichtkräfte an der kupplungssteckerseitigen Abdichtung. Vorteilhaft ist das Verriegelungselement so ausgebildet, daß es über eine Not-Entriegelung sofort, vorzugsweise nach dem inneren Schließvorgang lösbar ist, so daß Kupplungsstecker und Kupplungsdose unmittelbar frei beweglich sind. Eine Ausbildungsvariante der Not-Entriegelung kann in einer Reißleine bestehen, die den Umlegehebel des Verriegelungselementes öffnet und das Gestänge mit dem halbschalenförmigen Element freigibt, wenn eine entsprechende Zugkraft auf die Kupplung überschritten wird. Es ist selbstverständlich daß es eine Vielzahl weiterer mechanischer, pneumatischer, hydraulischer elektrischer oder magnetischer Ausführungsvarianten einer Not-Entriegelung gibt, die der Fachmann vorsehen kann, so daß die Erfindung nicht auf das Ausführungsbeispiel beschränkt ist.

Bevorzugt ist der Kupplungsstecker Teil einer Tankstellenzapfsäule und die Kupplungsdose als Tankverschluß bei einem Fahrzeug vorgesehen, das mit einem Kryotreibstoff betankt wird.

Ein Ausführungsbeispiel der Erfindung ist in der Zeichnung dargestellt und wird im folgenden näher beschrieben.

Es zeigen:
- Fig. 1: Einen Längsschnitt einer Kupplung, bei der die beiden Leitungsenden des Kupplungssteckers und der Kupplungsdose verschlossen sind;
- Fig. 2: Eine schematische Darstellung der mit dem Verriegelungselement zusammengekuppelten Kupplungsgehäuse;
- Fig. 3a: Einen schematischen Längsschnitt der in Figur 1 gezeigten Kupplung mit geöffnetem Strömungsweg;
- Fig. 3b: Einen schematischen Längsschnitt der in Figur 1 gezeigten Kupplung mit geschlossenem Strömungsweg;
- Fig. 3c: Einen schematischen Längsschnitt der in Figur 1 gezeigten Kupplung mit getrenntem Kupplungsstecker und Kupplungsdose.

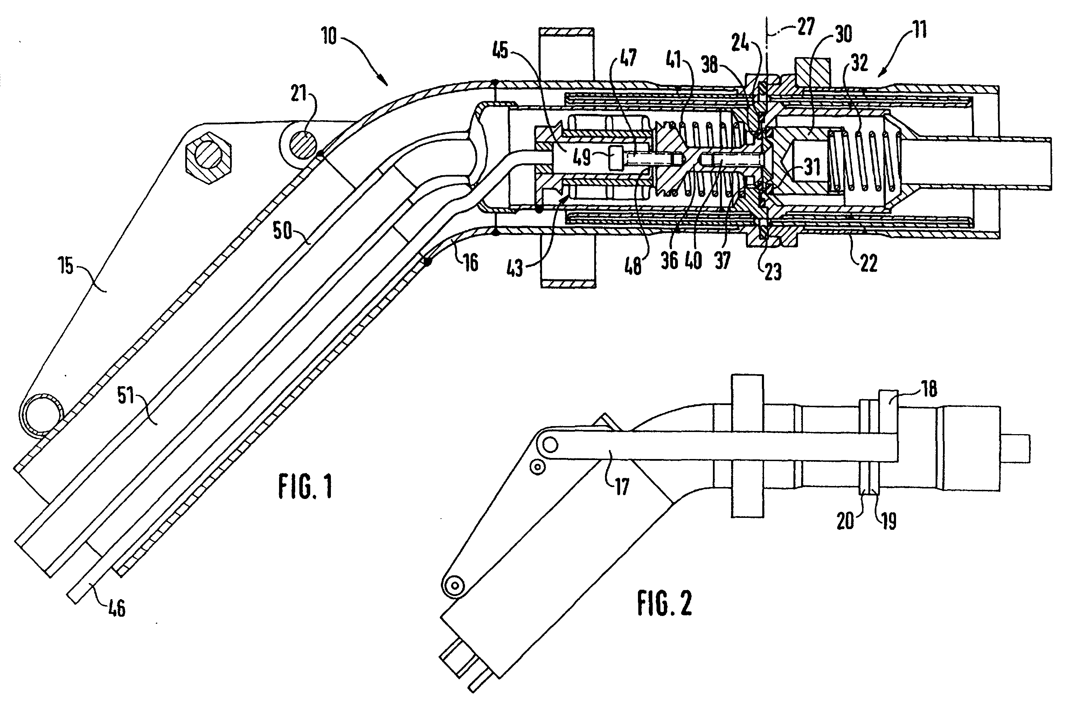

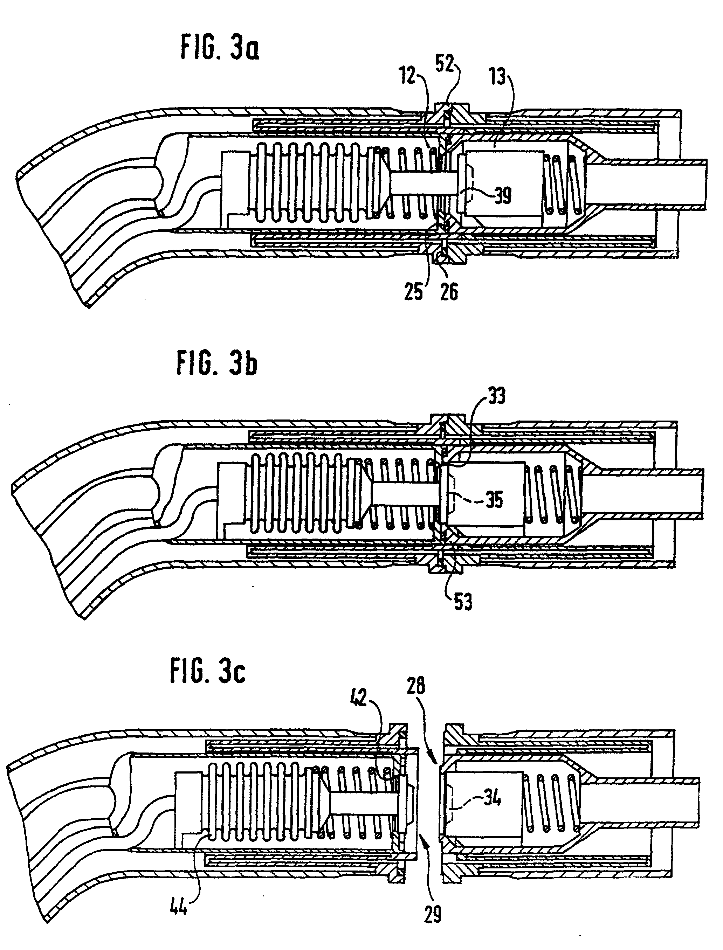

Die im Längsschnitt dargestellte Kupplung nach Figur 1 umfaßt einen Kupplungsstecker 10 und eine Kupplungsdose 11 zum Verbinden zweier Leitungsenden 12, 13 (Figur 3a). Die Verbindung des Kupplungssteckers 10 mit der Kupplungsdose 11 wird durch das Verriegelungselement hergestellt. Auf dem vakuumisolierten Kupplungsgehäuse 16 des Kupplungssteckers 10 ist hierzu ein Umlegehebel 15 vorgesehen, der um eine Achse 21 drehbar gelagert ist und an dem ein Gestänge 17 außerhalb der Drehachse 21 schwenkbar gelagert ist. An dem Gestänge ist ein halbschalenförmiges Element 18 befestigt, das einen Flansch 19 des vakuumisolierten Kupplungsgehäuses 22 der Kupplungsdose 11 umgreift und bei um die Achse 21 drehenden Umlegehebel 15 gegen einen Flansch 20 des Kupplungssteckers zieht. Über die Bewegung des Elements 18 wird die benötigte mechanische Kraft, die das Vakuumgehäuse 22 der Kupplungsdose 11 gegen die mit Dichtungen 23, 24 versehenen Kupplungsflächen 25, 26 des Kupplungssteckers 10 zieht, aufgebracht.

Jedes Kupplungsgehäuse 16, 22 bildet einen sich nahezu über die gesamte Länge von Kupplungsstecker 10 und Kupplungsdose 11 erstreckende, isolierende Vakuumkammer die ein Verdampfen beim Durchfluß von tiefkalten Medien in den Leitungsenden 12, 13 verhindern. Die Leitungsenden 12, 13 reichen bis zur Trennebene 27 von Kupplungsstecker 10 und Kupplungsdose 11. An jedem Leitungsende 12, 13 sind die sich gegenüberliegenden Mittel 28, 29 (Figur 3c) zum Öffnen und Schließen der Leitungsenden 12, 13 unmittelbar benachbart der Trennebene 27 angeordnet. Die Mittel 28 der Kupplungsdose 11 bestehen aus einem das Leitungsende 13 verschließenden Schließkörper 30, der eine Dichtung 31 aus PTFE trägt. Der Schließkörper 30 liegt über eine Feder 32 und Medium kraftbeaufschlagt an der Dichtfläche 33 (Figur 3b). Die Dichtfläche ist innerhalb des erweiterten Leitungsendes 13 angeordnet und in Form einer sich unter einem Winkel verjüngenden Wand des Leitungsendes 13 ausgebildet. Gegen die Dichtfläche 33 wird der Schließkörper 30 mit der Dichtung 31 von der Feder 32 gedrückt. Der Schließkörper 30 weist eine Ausnehmung 34 auf, die als Gegenstück zu einem Zentrierelement 35 des Kupplungssteckers 10 ausgebildet ist und dieses Zentrierelement 35 des Kupplungssteckers 10 formschlüssig aufnimmt.

Das Mittel 29 des Kupplungssteckers 10 zum Öffnen und Schließen des Leitungsendes 12 ist unmittelbar benachbart der Trennebene 27 angeordnet und besteht aus einer Steuerstange 36 die eine zur Kupplungsseite weisende offene Ausnehmung 37 aufweist, die eine Dichtung 38 aus PTFE trägt. Die Dichtung 38 wird von einem Flansch 39 des Zentrierelements 35 von oben abgedeckt. Das Zentrierelement 35 ist über Schraube 40 von der freien Seite des Leitungsendes 12 lösbar mit der Steuerstange 36 verbunden. Die Steuerstange 36 mit der Dichtung 38 wird über die Feder 41 gegen die Dichtfläche 42 gezogen. Die Dichtfläche 42 ist am erweiterten Leitungsende 12 vorgesehen. Die Steuerstange 36 ist mit einer als Balg 44 ausgebildeten Steuereinheit 43 verbunden. Die Steuereinheit weist einen Innenraum 45 auf, der über eine Steuerleitung 46 mit einem nicht näher dargestellten Druckraum verbunden ist. Das Steuerfluid des Innenraumes wird über nicht näher dargestellte Steuermittel über Steuerleitung 46 dem Innenraum 45 zugeführt.

Eine den Hub der Steuerstange 36 begrenzendes Element 47, beispielsweise eine Schraube, ist an der zum Innenraum 45 weisenden Seite der Steuerstange 36 eingeschraubt und ist durch eine mit dem Innenraum verbundene Anlagefläche 48 begrenzt, deren Durchtrittsöffnung für das Element 47 kleiner ist als dessen Kopf 49. Über die Einschraublänge wird der Ausfallhub der Steuerstange begrenzt. Dies verhindert eine Beschädigung des Balgs 44, wenn der Balg 44 in nicht gekuppeltem Zustand unter Steuerdruck gesetzt wird.

Das erweiterte Leitungsende 12 des Kupplungssteckers ist über zwei Leitungen 50, 51 die im wesentlich konzentrisch verlaufen, mit einem nicht näher dargestellten Behälter verbunden, der das kryogene Medium enthält.

Wie die Figuren 3a bis 3b zeigen, werden die beiden Kupplungsgehäuse 16, 22 in der Trennebene 27 stirnseitig gegeneinander gesetzt. An den Stirnseiten vorgesehene Zentrierringe 52, 53 dienen der Lageorientierung. Durch Herunterdrücken des Umlegehebels 15 und der kraftverstärkenden Mechanik werden der Kupplungsstecker 10 und die Kupplungsdose 11 fest gegeneinandergezogen und arretiert; die innere und äußere Dichtung 24 und 23 verformt sich. In dieser jetzt nach außen dichten Position ist keine Strömung des kryogenen Mediums möglich - auch das zwischen Kupplungsstecker 10 und Kupplungsdose 11 aufgrund des Formschlusses der Verbindungsflächen minimierte Totvolumen ist drucklos. Durch Aufschalten des Steuerdrucks wird der Innenraum 45 des Balgs 44 mit Druck beaufschlagt. Der Balg fährt die die Dichtung 38 haltende Steuerstange senkrecht zur Seite der Kupplungsdose über die Trennebene 27 hinaus aus. Dabei wird das Mittel 28 der Kupplungsdose gemeinsam mit dem Mittel 29 des Kupplungssteckers in Öffnungsstellung gebracht. Die beiden Leitungsenden 12, 13 sind jetzt miteinander verbunden und das kryogene Medium kann strömen. Nach Beendigung des Medienstromes wird der Innenraum 45 über die Steuerleitung 46 druckentlastet. Die Feder 41 schiebt die Steuerstange 36 mit dem Balg 44 in Schließstellung, bis die Dichtung 38 an der Dichtfläche 33 dichtend anliegt. Der Vorgang wird unterstützt durch die Drücke in beiden Leitungsenden 12, 13, da die wirksamen Balg- und Dichtungsflächen zusätzliche Schließkräfte hervorrufen.

Die Kupplung ist jetzt durch Betätigen des Umlegehebels trennbar.

## Patentansprüche

1. Kupplung zum Verbinden vakuumisolierter Leitungsenden umfassend eine Kupplungsdose (11) und einen Kupplungsstecker (10), die an den Leitungsende angeordnet und zum Führen eines kryogenen Mediums vorgesehen sind und die jeweils an den äußeren Leitungsenden Mittel (29,28) aufweisen, die die Leitungsenden (12, 13) verschließen, wobei der Kupplungsstecker (10) eine mit dem einen Mittel (29) verbundene Steuereinheit (43) aufweist, die mit einem Steuerdruck beaufschlagt mindestens das eine Mittel (29) öffnet, **dadurch gekennzeichnet, daß** eine mit der Steuereinheit (43) verbundene Steuerstange (36) an ihrer zur Kupplungsdose (11) gerichteten Seite ein Zentrierelement (35) aufweist und das Leitungsende (12) mit zwei Leitungen (50, 51) für die Zuund/oder Ableitung des kryogenen Mediums verbunden ist.

2. Kupplung nach Anspruch 1,
**dadurch gekennzeichnet,**
**daß** die Steuereinheit (43) mit einem Steuerelement (36) des Mittels (29) verbunden ist und das Steuerelement (36) über die Trennebene (27) von Kupplungsdose (11) und Kupplungsstecker (10) hinaus verschiebt, welches die Leitungsenden (12, 13) von Kupplungsstecker (10) und Kupplungsdose (11) öffnet.

3. Kupplung nach Anspruch 1 oder 2,
**dadurch gekennzeichnet,**
**daß** die Steuereinheit (43) als Balg (44), vorzugsweise Metallbalg oder Kolben-Zylindereinheit ausgebildet ist, der einen Innenraum (45) aufweist, welcher mit einer Steuerleitung (46) verbunden ist.

4. Kupplung nach einem der Ansprüche 1 bis 3,
**dadurch gekennzeichnet,**
**daß** die Steuereinheit (43) in dem Leitungsende angeordnet ist.

5. Kupplung nach einem der Ansprüche 1 bis 4,
**dadurch gekennzeichnet,**
**daß** das Steuerelement (36) eine mit der Steuereinheit verbundene Steuerstange aufweist, die eine Dichtung (38) trägt, welche mittels der Kraft eines Federelements (41) oder der Federeigenschaften des Balgs (44) an einer am Leitungsende (12) angeordneten Dichtfläche (42) anliegt.

6. Kupplung nach einem der Ansprüche 1 bis 5,
**dadurch gekennzeichnet**,
das Leitungsende (12) an seiner zur Kupplungsdose gerichteten Stirnseite mindestens eine ringförmige Kupplungsfläche (25, 26) aufweist und auf der Kupplungsfläche mindestens eine Dichtung (23, 24) angeordnet ist.

7. Kupplung nach einem der Ansprüche 1 bis 6,
**dadurch gekennzeichnet,**
**daß** die Kupplungsdose (11) einen im Leitungsende (13) angeordneten Schließkörper (30) aufweist, der eine Dichtung (31) trägt, die mittels der Kraft eines Federelements (32) an einer am Leitungsende angeordnete Dichtfläche (33) anliegt.

8. Kupplung nach Anspruch 7,
**dadurch gekennzeichnet,**
**daß** die Dichtung (31) mittels der Federkraft gegen die Dichtfläche (33) gedrückt wird.

9. Kupplung nach einem der Ansprüche 1 bis 8,
**dadurch gekennzeichnet,**
**daß** der Schließkörper (30) eine das Zentrierelement aufnehmende Ausbildung an der Stirnseite aufweist.

10. Kupplung nach einem der Ansprüche 1 bis 9,
**dadurch gekennzeichnet,**
**daß** die Mittel (28, 29) beider Leitungsenden unmittelbar benachbart zur Trennebene (27) von Kupplungsdose (11) und Kupplungsstecker (10) angeordnet sind.

11. Kupplung nach einem der Ansprüche 1 bis 10,
**dadurch gekennzeichnet,**
**daß** die Dichtungen (31, 38) der Mittel (28, 29) und die Dichtungen (23, 24) zum Abdichten gegen Umgebungs- und kryogenem Medium unmittelbar benachbart zur Trennebene (27) angeordnet und lösbar sind.

12. Kupplung nach einem der Ansprüche 1 bis 11,
**dadurch gekennzeichnet,**
**daß** die Verbindung des Kupplungssteckers (10) mit der Kupplungsdose (11) über ein Verriegelungselement erfolgt, das sich an dem Kupplungsstecker (10) abstützt und die Kupplungsdose (11) gegen die Kupplungsflächen (25, 26) zieht, wobei zwischen den Kupplungsflächen die Dichtungen (23, 24) dichtend anliegen.

13. Kupplung nach Anspruch 12,
**dadurch gekennzeichnet,**
**daß** das Verriegelungselement (14) so ausgebildet ist, daß über eine Not-Entriegelung die Verriegelung von dem Kupplungsstecker (10) und der Kupplungsdose (11) unmittelbar, vorzugsweise sofort nach dem Schließvorgang, lösbar ist.

14. Kupplungsstecker als Teil einer Tankstellenzapfsäule und Kupplungsdose als Tankverschluß eines Fahrzeugs nach einem der Ansprüche 1 bis 13.

## Claims

1. Coupling for connecting vacuum-insulated line ends comprising a coupling socket (11) and a coupling plug (10) which are arranged at the line ends and which are provided for conveying a cryogenic medium and which in each case have, at the outer line ends (29, 28), means which close the line ends (12, 13), the coupling plug (10) having a control unit (43) which is connected to the one means (29) which, acted upon by a control pressure, opens the at least one means (29), **characterized in that** a control rod (36) connected to the control unit (43) has a centring element (35) on its side directed towards the coupling socket (11) and the line end (12) is connected to two lines (50, 51) for supplying and/or removing the cryogenic medium.

2. Coupling according to Claim 1, **characterized in that** the control unit (43) is connected to a control element (36) of the means (29) and displaces the control element (36) beyond the plane of separation (27) of coupling socket (11) and coupling plug (10), which opens the line ends (12, 13) of the coupling plug (10) and coupling socket (11).

3. Coupling according to Claim 1 or 2, **characterized in that** the control unit (43) is designed as a bellows (44), preferably a metal bellows or piston/cylinder unit, which has an internal space (45) which is connected to a control line (46).

4. Coupling according to one of Claims 1 to 3, **characterized in that** the control unit (43) is arranged in the line end.

5. Coupling according to one of Claims 1 to 4, **characterized in that** the control element (36) has a control rod which is connected to the control unit and bears a seal (38) which bears against a sealing surface (42), which is arranged at the line end (12), by means of the force of a spring element (41) or the spring characteristics of the bellows (44).

6. Coupling according to one of Claims 1 to 5, **characterized in that** the line end (12) has at least one annular coupling surface (25, 26) on its end side directed towards the coupling socket and at least one seal (23, 24) is arranged on the coupling surface.

7. Coupling according to one of Claims 1 to 6, **characterized in that** the coupling socket (11) has a closing body (30) which is arranged in the line end (13) and bears a seal (31) which bears against a sealing surface (33), which is provided at the line end, by means of the force of a spring element (32).

8. Coupling according to Claim 7, **characterized in that** the seal (31) is pressed against the sealing surface (33) by means of the spring force.

9. Coupling according to one of Claims 1 to 8, **characterized in that** the closing body (30) has, on the end side, a formation which receives the centring element.

10. Coupling according to one of Claims 1 to 9, **characterized in that** the means (28, 29) of both line ends are arranged directly adjacent to the plane of separation (27) of the coupling socket (11) and coupling plug (10).

11. Coupling according to one of Claims 1 to 10, **characterized in that** the seals (31, 38) of the means (28, 29) and the seals (23, 24) for providing a seal against environmental and cryogenic medium are arranged and are detachable directly adjacent to the plane of separation (27).

12. Coupling according to one of Claims 1 to 11, **characterized in that** the coupling plug (10) is connected to the coupling socket (11) via a locking element which is supported on the coupling plug (10) and pulls the coupling socket (11) against the coupling surfaces (25, 26), the seals (23, 24) bearing in a sealing manner between the coupling surfaces.

13. Coupling according to Claim 12, **characterized in that** the locking element (14) is designed in such a manner that the lock between the coupling plug (10) and the coupling socket (11) can be released directly, preferably immediately after the closing process, via an emergency release.

14. Coupling plug as part of a petrol station pump and coupling socket as a tank cap of a vehicle according to one of Claims 1 to 13.

## Revendications

1. Accouplement pour relier des extrémités de conduite sous vide comprenant une prise d'accouplement (11) et un connecteur d'accouplement (10) aux extrémités des conduites pour transférer un fluide cryogénique, ayant chaque fois à l'extrémité extérieure de la conduite, des moyens (29, 28) fermant les extrémités de conduite (12, 13), le connecteur (10) ayant unc unité de commande (43) reliée à un moyen (29) et qui, sollicitée par une pression de commande, ouvre au moins ce moyen (29),
**caractérisé en ce qu'**
une tige de commande (36) reliée à l'unité de commande (43) comporte sur son côté tourné vers la prise d'accouplement (11), un élément de centrage (35), et l'extrémité de conduite (12) est reliée à deux conduites (50, 51) pour l'alimentation et/ou l'évacuation du fluide cryogénique.

2. Accouplement selon la revendication 1,
**caractérisé en ce que**
l'unité de commande (43) est reliée à un élément de commande (36) du moyen (29) et pousse l'élément de commande (36) au-delà du plan de séparation (27) de la prise d'accouplement (11) et du connecteur d'accouplement (10), ouvrant les extrémités de conduite (12, 13) du connecteur (10) et de la prise (11).

3. Accouplement selon la revendication 1 ou 2,
**caractérisé en ce que**
l'unité de commande (43) est réalisée sous la forme d'un soufflet (44), de préférence un soufflet métallique ou une unité piston/cylindre ayant une cavité (45) reliée à une conduite de commande (46).

4. Accouplement selon l'une quelconque des revendications 1 à 3,
**caractérisé en ce que**
l'unité de commande (43) est prévue dans l'extrémité de conduite.

5. Accouplement selon l'une quelconque des revendications 1 à 4,
**caractérisé en ce que**
l'élément de commande (36) comporte une tige de commande reliée à l'unité de commande, cette tige portant un joint (38), appliqué par la force d'un élément de ressort (41) ou les caractéristiques élastiques du soufflet (44) sur une surface d'étanchéité (42) prévue à l'extrémité de conduite (12).

6. Accouplement selon l'une quelconque des revendications 1 à 5,
**caractérisé en ce que**
l'extrémité de conduite (12) comporte sur son côté frontal tourné vers la prise, au moins une surface d'accouplement (25, 26) annulaire et cette surface comporte au moins un joint (23, 24).

7. Accouplement selon l'une quelconque des revendications 1 à 6,
**caractérisé en ce que**
la boîte d'accouplement (11) comporte un organe de fermeture (30) prévu à l'extrémité de conduite (13), cet organe portant un joint (31) appliqué par la force d'un élément de ressort (32) contre une surface d'étanchéité (33) prévue à l'extrémité de conduite.

8. Accouplement selon la revendication 7,
**caractérisé en ce que**
le joint (31) est pressé contre la surface d'étanchéité (33) par la force de ressort.

9. Accouplement selon l'une quelconque des revendications 1 à 8,
**caractérisé en ce que**
la face frontale de l'organe de fermeture (30) comporte une forme recevant l'élément de centrage.

10. Accouplement selon l'une quelconque des revendications 1 à 9,
**caractérisé en ce que**
les moyens (28, 29) des deux extrémités de conduite sont prévus directement au voisinage du plan de séparation (27) de la prise (11) et du connecteur (10).

11. Accouplement selon l'une quelconque des revendications 1 à 10,
**caractérisé en ce que**
les joints (31, 38) des moyens (28, 29) et les joints (23, 24) assurant l'étanchéité vis-à-vis de l'environnement et du fluide cryogénique, sont prévus de manière amovible directement au voisinage du plan de séparation (27).

12. Accouplement selon l'une quelconque des revendications 1 à 11,
**caractérisé en ce que**
la liaison du connecteur (10) et de la prise (11) se fait par un élément de verrouillage qui s'appuie contre le connecteur (10) et tire la prise (11) contre les surfaces d'accouplement (25, 26), les joints (23, 24) étant appliqués de manière étanche contre les surfaces d'accouplement.

13. Accouplement selon la revendication 12,
**caractérisé en ce que**
l'élément de verrouillage (14) est réalisé pour que le verrouillage entre le connecteur (10) et la prise (11) puisse être ouvert par un moyen de déverrouillage de secours, directement de préférence immédiatement après l'opération de fermeture.

14. Connecteur d'accouplement comme partie d'une colonne de remplissage et prise d'accouplement comme fermeture de réservoir d'un véhicule selon l'une quelconque des revendications 1 à 13.
